# EUROPEAN PATENT APPLICATION

(11) **EP 1 962 168 A1**
(43) Date of publication of application: **27.08.2008**
(21) Application number: 06805123.4
(22) Date of filing: 31.10.2006
(51) Int. Cl.: G06F 1/00

(54) **A METHOD FOR DETECTING THE OPERATION BEHAVIOR OF THE PROGRAM AND A METHOD FOR DETECTING AND CLEARING THE VIRUS PROGRAM**

(30) Priority: 16.11.2005 CN 200510114946; 15.02.2006 CN 200610007613
(71) Applicant: Bai, Jie, Beijing 100089 (CN); Li, Wei, Beijing 100089 (CN); Lu, Zhengyu, Beijing 100080 (CN)
(72) Inventor: Bai, Jie, Beijing 100089 (CN); Li, Wei, Beijing 100089 (CN); Lu, Zhengyu, Beijing 100080 (CN)
(74) Representative: Steimle, Josef
(86) International application number: PCT/CN2006/002922
(87) International publication number: WO 2007/056934

(57) **Abstract**

A method for detecting the operation behavior of the program includes: obtaining the destructive operation behavior of the known virus program; setting the corresponding control and process program according to the destructive operation behavior; making the control and process program get the control right of destructive operation behavior; the destructive operation behavior of the program to be detected calling the corresponding control and process program, the corresponding control and process program recording the operation behavior of the said program to be detected. The method can also return the success response information by the control and process program, so as to induce the program to be detected to perform the next behavior, but the program to be detected don't perform in practicality. That is, the present invention can provide a virtual environment for the program to be detected in order to record a series behavior of it. A method for clearing the virus program setup and perform the adverse behavior operation of the program based on the behavior of the virus program to realize the recovery of the demolished data by the virus.

## Description

The present application claims the priorities of CN Application No. 200510114946.1 filed on November 16, 2005 titled "METHOD FOR CHECKING PROGRAM OPERATION BEHAVIOR, AND METHOD FOR DETECTING AND REMOVING A VIRUS PROGRAM" and CN Application No. 200610007613.3 filed on February 15, 2006 titled "METHOD FOR CHECKING PROGRAM OPERATION BEHAVIOR, AND METHOD FOR DETECTING AND REMOVING A VIRUS PROGRAM", which are incorporated herein by reference in their entirety.

### Field of the Invention

The present invention relates to a method for checking program, and in particular, to a method for checking program operation behavior, and a method for detecting and removing a virus program using the method for checking program operation behavior.

### Background of the Invention

The existing antivirus programs usually check a suspicious virus program by a method of feature code identification. Such antivirus programs include: a virus code base, in which the code strings of various computer virus programs specifically selected are stored; and a virus scanning program, which is used for code-scanning and analyzing a program to be checked. The number of computer viruses that may be recognized by the virus scanning program totally depends on the number of the virus feature codes contained in the virus code base, and the virus scanning program determines whether the program to be checked is a virus program with the feature code. Usually, the feature codes are obtained by antivirus technicians via analyzing and tracking the specific workflow of the viruses by means of analytical tool programs such as DEBUG and PROVIEW and dedicated experimental computers. In other words, the detection and analysis of virus behaviors are accomplished by antivirus technicians.

In practice, it is put forward to diagnose whether a program to be checked is a virus program by a method of virus behavior infection experiment. In this method, a program to be checked is run first, and then some normal programs definitely without virus are run. Subsequently, it is observed whether the length and checksum of these normal programs are changed. If it is found that the length of a normal program without virus is lengthened or shortened, or the checksum is changed, it may be determined that the program to be checked is a virus program. However, to guarantee the security of the computer, a CPU is usually simulated via software. This CPU may fetch, decode and execute an instruction just like a real CPU, and may simulate the result of a segment of codes run on a real CPU. For a given set of machine code sequences, the virtual CPU may automatically extract the operation code part of the first instruction, determine the type of the operation code and the addressing mode so as to determine the length of the instruction, then execute the instruction in a corresponding function, and determine the location of the next instruction according to the execution result. This process is repeated until a certain situation appears so as to terminate the operation. Finally, the virtual CPU searches for the virus feature code in the execution result (decrypted virus program plain text). The term "virtual" used here means that a virus infected file is not executed actually, Instead, the virtual CPU only simulates the effects of the actual execution of the virus infected file. Therefore, such a technology cannot realize the detecting and recording of a virus behavior, and only the operation result of the virus is obtained.

With the development of program detection technologies, it is put forward to diagnose whether a program is a virus program by a method of virus behavior monitoring. By years of observation and study on virus, people find that virus has some behaviors, i.e., some special instruction operations. For example, it is a common behavior of viruses to interrupt disk writing operation via 13H, and such behavior is very special. In this method, when a program to be checked is run, its behaviors are monitored. If a special operation behavior, i.e., a virus behavior, of the program is found, an alarm is given immediately. However, this method requires that the antivirus program can create a virtual execution environment for the program to be checked, in which all the elements that may be used by the program, including hard disk and port, etc., are provided. This is too difficult to be realized, and there are too many elements to be simulated. As a result, there exits substantially no example in which this method is realized in the antivirus software. Moreover, the main characteristic of such a method lies in that the determination of whether a program is a virus program is realized by the determination of a single behavior. Because the conclusion is obtained via the determination of a single behavior, misjudgement may easily be caused in such a method. For example, if the operation of interrupting the disk writing in a certain region via 13H is regarded as a virus behavior, a normal program that employs such an operation may also be taken as a virus.

### Summary of the Invention

In view of the above problems, it is an object of the invention to provide an easy method for checking program operation behavior.

It is another object of the invention to provide a virtual running environment of the program to be checked. By means of the virtual running environment, the operation behavior of the program to be checked can be effectively detected. However, in fact, the program to be checked is not run actually.

It is the third object of the invention to provide a method for detecting and removing a virus program using the method for checking program operation behavior.

To solve the above technical problems, the invention provides a method for checking program operation behavior, including:

obtaining a devastating operation behavior of a known virus program, and setting a corresponding control program according to the devastating operation behavior;

making the control program obtain a control right on the devastating operation behavior; and

calling, by the devastating operation behavior of a program to be checked, the corresponding control program, and recording, by the control program, the operation behavior of the program to be checked.

The method further includes: returning, by the control program, successful response information to the program to be checked.

Wherein, the control program is embedded into an operating system or a system function call routine corresponding to the devastating operation behavior, and the control right on the devastating operation behavior is handed over to the corresponding control program, so that the control program obtains the control right on the devastating operation behavior.

The control program is embedded into the operating system in the following steps:

adding information required for calling the control program to a system function call table of the operating system; and

modifying an address of the system function call routine to an address of the corresponding control program.

The control program may also be embedded into the operating system in the following steps:

storing information required for calling the control program in an independent operation behavior call table; and

making a priority of the operation behavior call table higher than that of the system function call table of the operating system.

The method further includes: setting a closed memory running space for the program to be checked.

A closed memory running space is set for the program to be checked by performing collision detection on an address range involved during the running of the program to be checked or by allocating an address range to the program to be checked.

The method further includes: converting the program to be checked into a format that cannot be recognized by the actual operating system and storing the program converted to a designated storage address.

The method further includes: outputting all the recorded behavior data of the program to be checked after the running of the program to be checked is completed.

Moreover, an independent input/output logic interface is set between the operating system and the control program for transferring data therebetween.

The invention provides a method for detecting computer virus, including:

obtaining a devastating operation behavior of a virus program;

setting a corresponding control program according to the devastating operation behavior;

making the control program obtain a control right on the devastating operation behavior; calling, by the devastating operation behavior of the program to be checked, the corresponding control program; recording, by the control program, an operation behavior of the program to be checked; and

determining whether the program to be checked is a virus program according to obtained behavior data or a behavior data set of the program to be checked as well as preset behavior data or behavior data set of typical virus programs.

Wherein, the control program is embedded into an operating system, or a system function call routine corresponding to the devastating operation behavior hands over its control right to the corresponding control program, so that the control program obtains the control right on the devastating operation behavior.

The invention provides a method for removing computer virus, including:

obtaining a devastating operation behavior of a virus program;

setting a corresponding control program according to the devastating operation behavior;

calling the control program by the program to be checked, and recording an operation behavior of the program to be checked by the control program;

determining whether the program to be checked is a virus program according to obtained behavior data or a behavior data set of the program to be checked as well as preset behavior data or behavior data set of typical virus programs; and

removing the program to be checked if it is determined that the program to be checked is a computer virus program.

The method for removing computer virus further includes: embedding the control program into an operating system, or handing over a control right to the corresponding control program by a system function call routine corresponding to the devastating operation behavior, and making the control program obtain the control right on the devastating operation behavior.

The method for removing computer virus further includes:

establishing a corresponding reverse behavior operation step according to the obtained behavior data or behavior data set of the program to be checked; and

executing the reverse behavior operation step.

In comparison with the prior art, the invention at least has the following advantages.

In the method for checking program operation behavior according to the embodiments of the invention, for example, a control program for the devastating operation behavior of the corresponding virus program is embedded into an operating system by making the control program obtain the control right on the devastating operation behavior, so that the operation instruction and parameter corresponding to the devastating operation behavior of the program to be checked can be monitored by the control program. Therefore, no devastating operation result will be caused, and the operation behavior can be detected and recorded. Such a implementation mode is easy and simple, and no analytical tool program such as DEBUG and PROVIEW and no dedicated experimental computer are required to analyze and track the specific workflow of the virus.

In the method for checking program operation behavior according to the embodiments of the invention, information of successful response to the calling of the program to be checked may also be returned by the control program, so that the program to be checked may be induced to go on with the next behavior. However, in fact, the program to be checked is not run actually. In other words, a virtual running environment is provided for the program to be checked, and the whole operating system, CPU, storage and so on do not need to be simulated under this environment. Therefore, the efficiency of the detection and record of program operation behavior may be improved.

The invention further provides a method for detecting a virus program using the method for checking program operation behavior. Wherein, it may be determined whether the program to be checked is a virus by obtaining typical behaviors of typical viruses in practice, obtaining the behavior data of the program to be checked by the method for checking program operation behavior and directly comparing the behavior of the program to be checked with that of typical viruses. As a result, not only a known virus can be recognized, but also most of the unknown virus programs may be recognized rather accurately.

The invention further provides a method for removing a virus program using the method for checking program operation behavior. In the method for removing a virus program, not only the virus program can be removed, but also an reverse behavior operation of the virus program may be set up and executed according to the behavior of the virus program. As a result, data destroyed by the virus may be recovered, and the problem that although the virus is removed but no destroyed data can be recovered may be solved.

### Brief Description of the Drawings

The invention will now be further illustrated in detail in conjunction with the drawings and specific embodiments of the invention.

Figure 1 is a flow chart of a method for checking program operation behavior according to an embodiment of the invention;

Figure 2 is a schematic diagram showing the structure of a system function call table;

Figure 3 is a schematic diagram of the actual storage area of a system function call routine;

Figure 4 is a schematic diagram showing the structure of the system function call table shown in Figure 2 when a corresponding control program is saved;

Figure 5 is a schematic diagram of the actual storage area of the function call program in the storage example shown in Figure 4;

Figure 6 is a schematic diagram showing the structure of an independent operation behavior call table in which all the control programs are stored;

Figure 7 is a flow chart of a method for detecting computer virus according to an embodiment of the invention;

Figure 8 is a flow chart of a method for detecting and removing computer virus according to an embodiment of the invention; and

Figure 9 is a schematic diagram showing the structure of another independent operation behavior call table in which all the control programs are stored.

### Detailed Description of the Embodiments

The core concept of the invention lies in that: the operation behavior of a program to be checked is checked by embedding a control program corresponding to the devastating operation behavior of the virus program into an operating system. The control program calls the program to be checked and returns success response information, so that the program to be checked may be induced to go on with the next behavior. However, in fact, the program to be checked is not run actually. Thus, a series of behaviors and operations of the program to be checked may be recorded.

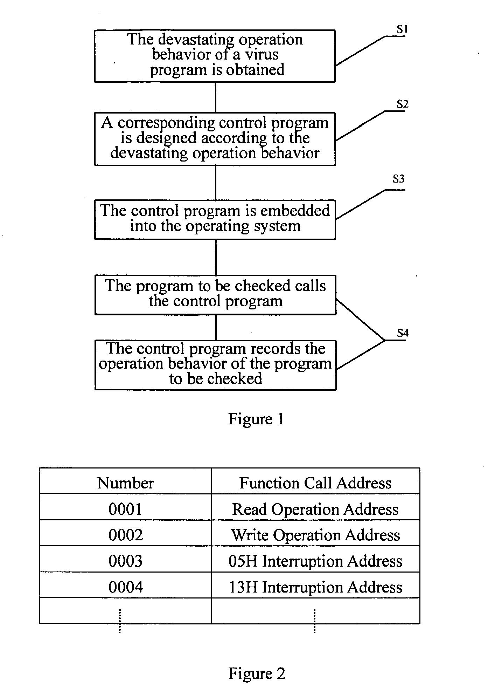

Referring to Figure 1, it is a flow chart of the method for checking program operation behavior according to an embodiment of the invention, which includes the following steps:

Step S1: The devastating operation behavior of a virus program is obtained. By years of observation and study on viruses, technicians find that some behaviors of a virus are the common behaviors of viruses, and such behaviors are very special. The resolving and obtaining of the devastating operation behavior of a known virus program may be implemented manually or via computer. The devastating operation behavior generally includes unconventional operations or operations causing malignant results on a computer system, such as unconventional read-write operation, deletion of a system file, operation leading to memory collision and the destruction of hard disk partition table. Some behaviors that may be used to monitor the virus will be listed hereinafter:

1) Occupation of INT13H (Operating System 13H Interruption)

All booting-type viruses attack the BOOT sector or master boot sector. When a system is started, the system begins to work when the master control program in the BOOT sector or master boot sector obtains the execution control right. Usually, a booting-type virus occupies the INT 13H interruption operation. When the system is booted, other system function call functions have not been set, and they cannot be utilized. The booting-type virus occupies the system function operation of INT 13H interruption and places virus program codes therein. In other words, the virus obtains or replaces the control right of the program code of the INT 13H interruption with virus program codes.

2) Modification of the total memory of the data area or the address range of the coverage area in a system, such as DOS system. After a virus resides in the memory, it needs to modify the total memory to prevent itself from being covered by the system.

3) Write action on executable files such as COM and EXE files. The virus codes are written or embedded into COM and EXE files so as to implement infection.

4) Switching between a virus program and a hosting program. When a virus-infected program is run, it first runs the virus program and then executes the hosting program. During the switching between the virus program and the hosting program, there are some typical characteristic behaviors.

In addition to the above devastating operation behaviors that are relatively apparent, a virus program may usually further include some normal operation behaviors. If these operation behaviors, alone or in combination, can cause a dangerous operation that may destroy data, these operation behaviors also fall in the range of devastating operation behaviors of virus programs according to the invention.

Usually, the devastating behavior of a virus program may be consisted of a series of instructions or instruction sets that execute devastating operations. Moreover, each of the instructions or instruction sets causes at least one independent devastating operation behavior. Therefore, the resolving of the devastating operation behavior of an existing virus program means the extracting of the instruction or instruction set related to an independent devastating operation behavior contained in the existing virus program. For example, when it is assumed that the calling of the 03H or 05H function of the 13H interruption relates to a potential dangerous operation that may destroy data, then the instruction corresponding to the calling of the 03H or 05H function of the 13H interruption may be regarded as an instruction that generates an independent devastating operation behavior. When it is assumed that the combination of the calling of the 02H function of the 10H interruption and the calling of the 06H function of the 11 H relates to a potential dangerous operation that may destroy data, then the instruction set corresponding to the calling of the 02H function of the 10H interruption and the calling of the 06H function of the 11H may be regarded as an instruction set that generates an independent devastating operation behavior. If a program to be checked has such an instruction code, it may be known that the program to be checked has a suspicious operation behavior that may destroy other programs or data. By collecting these behaviors, it may be determined with the behavior set of the program whether the program is a virus program and how to maximally recover the corresponding data destroyed by the virus program.

The devastating operation behavior of a known virus program may also be obtained with the assistance of a computer. For example, the devastating operation behavior of a known or an unknown virus program may be obtained with a method for detecting a virus by providing an infected object for inducing virus infection, as disclosed in CN Application No. 01117726.8 titled "METHOD, SYSTEM AND MEDIA FOR DETECTING AND REMOVING A KNOWN OR AN UNKNOWN COMPUTER VIRUS". Because the invention with the CN Application No. 01117726.8 has been published, the method will not be described in detail here.

Step S2: A control program corresponding to the devastating operation behavior is set or designed according to the devastating operation behavior.

Therefore, when the devastating operation behavior of an existing virus program is resolved, a control program corresponding to the devastating operation behavior can be designed according to the devastating operation behavior. The control program is adapted to respond to the instruction and parameter relevant to the devastating operation behavior of the program to be checked, feed back information indicating the success of the devastating operation behavior so as to induce the program to perform the next behavior, and record the devastating operation behavior of the program to be checked at the same time.

Assuming that the instruction and parameter relevant to the devastating operation behavior in a program is: DEL (parameter 1; parameter 2; parameter 3), where DEL represents deletion, parameter 1 represents the disk number deleted, parameter 2 represents the cluster number deleted, parameter 3 represents a variable indicating whether the deletion is successful. Then, the control program corresponding to the devastating operation behavior may be as follows:

(1) WRITE (FILE1, "DEL (parameter 1; parameter 2; parameter 3) ");

(2) WRITE (DEL (parameter 1; parameter 2; parameter 3),0,0,0);

Where the instruction of Line (1) indicates writing the devastating instruction "DEL (parameter 1; parameter 2; parameter 3)" into file FILE1 as a character string; and the instruction in Line (2) indicates feeding a tag "0" representing operation success back to the devastating instruction DEL (parameter 1; parameter 2; parameter 3).

Step S3: The control program is embedded into the operating system, so that the control program obtains the control right on the devastating operation behavior. Such control right may be obtained by making the control program have a higher priority than that of the operating system to get the system control right.

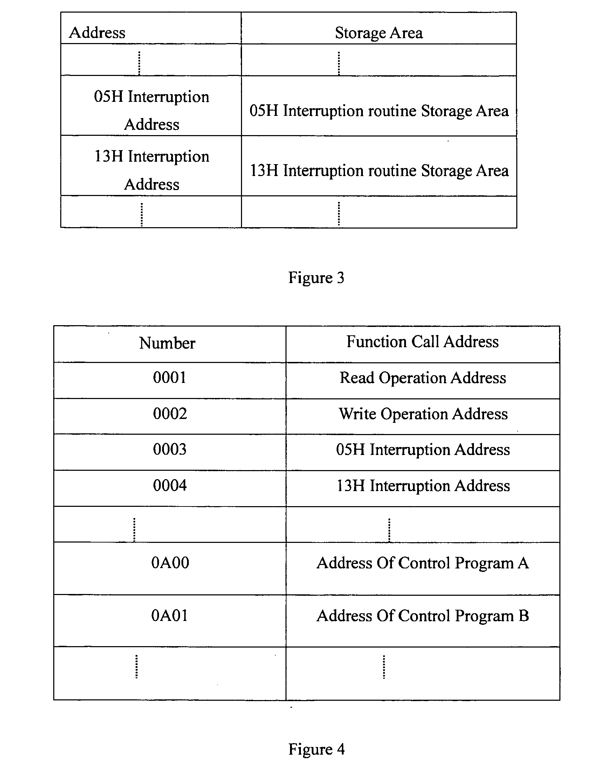

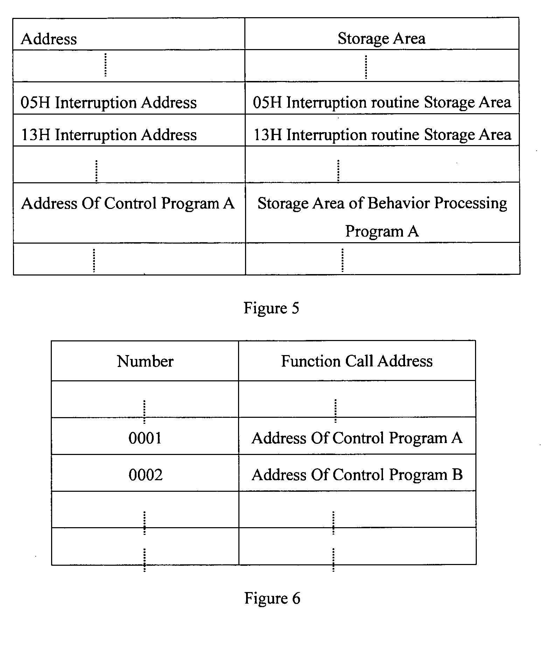

In order to be able to automatically and quickly detect and record a devastating operation behavior that may appear in a program, so as to discriminate whether the program is a virus program, it is required that the control program can obtain the control right on the devastating operation behavior that may occur in the program to be checked, so as to obtain the devastating operation behavior occurred in the program to be checked. Therefore, by embedding the control program into the operating system, the control program is enabled to obtain the control right on the corresponding devastating operation behavior. However, the control program may be enabled to obtain the monitoring right on the system in other modes, so that the control program may detect and record the devastating operation behavior of the program to be checked. When the mode of embedding the control program into the operating system is employed, it may be realized by embedding the control program into the function call table of the operating system. Alternatively, the control program may be stored in an independent operation behavior call table, and the independent operation behavior call table is made to have a higher priority than that of the function call table of the operating system. For example, a system function call table exists in any operating system, and the system function call table may have different structures as required. Referring to Figure 2, the system function call table shown in Figure 2 includes two fields: a number field, which is adapted to store the number of the system function call routine; and a function call address field, which is adapted to store the pointer, i.e., the address, of the system function call routine. This address usually corresponds to the first address of the system function call routine. Figure 3 is a schematic diagram of the actual storage area of a system function call routine. When a certain function provided by the operating system is needed, for example, when the disk writing operation provided by the 13H interruption routine is needed, it is required to extract the address of the 13H interruption routine from the table shown in Figure 2, and then read the corresponding program from the corresponding address in the storage area shown in Figure 3 into the memory for execution, thus the operation result is obtained. If the control program is embedded into the operating system, a method that may be employed is storing the corresponding control program into the system function call table. Assuming that 100H (H represents hexadecimal) devastating operation behaviors are resolved, and 100H corresponding control programs have been designed, then the storage addresses of these 100H control programs are stored in the table shown in Figure 2, and the storage result is as shown in Figure 4. Figure 5 is a schematic diagram of the actual storage area of the function call program in the storage example shown in Figure 4. The storage addresses of the control programs are stored in turn behind the address of the system function call routine.

In practice, the method for embedding the control program into the operating system is not limited to the storage mode shown in Figure 4. The mode shown in Figure 6 in which the control program is directly stored as an independent operation behavior call table may also be employed, and the system function call pointer, i.e., the address of the system function call routine in the function call address field in Figure 4, is modified to the address of the corresponding control program, so that the control program may have a priority higher that that of the system function call routine. For example, in Figure 4, assuming that the address of the control program A numbered as 0A00 corresponds to the 05H interruption numbered as 0003, then the "05H interruption address" stored in the field "function calling address" needs to be modified to "address of control program A". Thus, when the instruction relevant to the devastating operation behavior calls the program corresponding to the "05H interruption address", the "address of control program A" is called in fact, so that the "control program A" obtains a higher system control right than that of the "05H interruption". The control program may be embedded into the operating system by further deploying such concept.

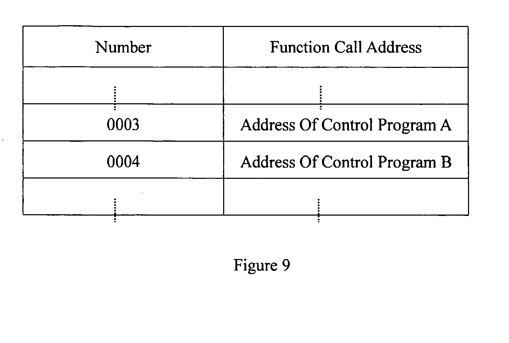

In another embodiment, the system function call routine corresponding to the devastating operation behavior may also hand over its control right to the corresponding control program, so that the control program obtains the control right on the devastating operation behavior. For example, for the storage mode shown in Figure 9, all the control programs constitute another system function call table in the system. The control program may obtain the control right on the devastating operation behavior as long as the table has a higher priority than that of the original system function call table of the system. For example, when the control program is called by a program to be checked to call the system function call routine, the control program in the table shown in Figure 9 is called first. If the control program called does not exist in the table shown in Figure 9, the real system function call routine in the table shown in Figure 2 is called.

By Step S3, the control program has obtained the control right on the devastating operation behavior, thus the operation behavior of the program to be checked may be recorded by the control program when the program to be checked calls the control program in Step S4. In other words, when the program to be checked is run, once the instruction in the program to be checked for implementing devastating operation behavior is executed, i.e., once the corresponding system function call routine is called, the corresponding control program will be called first, and the devastating operation behavior of the program to be checked will be recorded by the control program.

Usually, the virus program needs to obtain a devastating behavior operation result. The subsequent operations are performed only when a result of successful operation is obtained. Therefore, to further perform judgment on the program to be checked, information of successful response to the calling of the program to be checked may also be returned by the control program, so that the program to be checked may be induced to go on with the next behavior. In fact, because the control right on the operating system has been taken over by the control program in Step S3, the program to be checked does not obtain the actual operation result, the information it receives is the information transferred back by the control program, which is false information with respect to its requirement. Therefore, the program to be checked is not actually run under the environment of the operating system; instead, it is only run virtually under the environment in which the control program possesses the master control right. As a result, a series of behaviors and operations of the program to be checked may be detected and recorded, and no damage will be caused to the system. The method for checking program operation behavior according to this embodiment may be interpreted as follows: an operation environment is simulated via software in an actual operating system. The operation result and data in this environment is totally isolated from the actual operating system, but the execution process and result of a file or process is totally the same as those in the actual operating system.

In practice, Step S3 is an optional step. No matter whether the control program is embedded into the operating system, the virtual running environment that induces the behavior of the program to be checked may be formed as long as the control program has a higher control right than the operating system when the instruction relevant to the program operation behavior is executed, thus the operation behavior of the program to be checked may be checked.

In the method for checking program operation behavior according to the embodiment, the control program has a higher priority than that of the system function calling operation of the operating system itself, so the control program obtains the control right during the operation of the program to be checked. Therefore, the operation situation of the program to be checked may be checked and recorded. Moreover, because the control program can feed back a response of the success operation of the behavior of the program to be checked so as to induce the program to be checked to perform the next behavior, the behavior and result totally the same as the execution in the real environment may be obtained. Even if no virtual response is fed back to the program to be checked, the program to be checked may still be identified as long as it goes on with its operation behavior. However, in this way, if the program to be checked is a virus program, a devastating result may be caused. Therefore, in a preferred embodiment, the potential devastating result that may appear during the checking of the program to be checked may be eliminated by feeding back a virtual response to the program to be checked and making the program to be checked obtain a virtual operation execution result. In the method for checking program operation behavior according to this embodiment, the control program only detects the behavior or a series of behaviors of the virus and outputs the behavior data detected to a screen and/or a certain designated file. The control program itself does not participate in the analysis of the behavior of the program or the determination of whether the program is a virus.

The method for checking program operation behavior according to the embodiment may also include: setting an isolated memory space in the memory for the program to be checked when it applies for running. For example, the corresponding control program also needs to possess a priority on the function calling operation of applying for memory space, thus an isolated memory space may be set in the memory for running the program to be checked. By isolating the running of the program to be checked totally in the virtual running environment, It may be prevented to destroy the actual operating system or hardware device during the execution of the program. The control program totally isolates the memory needed to run the program to be checked logically, i.e., the memory needed is a dedicated logic memory, so that it may be prevented that the program to be checked infects the actual software and hardware when it is executed.

In practice, a closed memory operation space may be set for the program to be checked by performing collision detection on the address range involved during the running of the program to be checked or by the mode of allocating an address range to the program to be checked. Wherein, the second mode may be realized by a technology in which the corresponding control program is made to simulate an operating system to allocate an address space to an application, which will not be described again here. Whereas in the first mode, after the corresponding control program obtains the control right on the system memory, it is checked whether the space outside the address space defined for the program to be checked is occupied or is likely to be occupied, i.e., whether it is used or whether control collision occurs. When the space is occupied or is likely to be occupied, the control program limits the address range of the program to be checked through its control right on the memory. Thus, a closed memory operation space may be set for the program to be checked.

The method for checking program operation behavior according to the embodiment may also include: converting the program to be checked into a format that cannot be recognized by the actual operating system; and storing the converted program to a designated storage address. For example, the actual operating system is Windows, and the program to be checked may be converted into a file of Linux system or other files that cannot be recognized by the Windows system, so that it cannot be recognized in the current system. Thus, the affects of the program to be checked on the actual operating system are eliminated as much as possible. Alternatively, the program to be checked may be converted into a temporary file and stored in a designated physical storage media after being compressed. The modification of the property of the program to be checked may convert a harmful program into a file that cannot be recognized by the actual operating system, so that the probability of hazard caused by the program to be checked may be totally eliminated.

The method for checking program operation behavior according to the embodiment may also include: setting an independent input/output logic interface between the operating system and the control program for transferring data therebetween. In other words, the actual operating system and the virtual running environment are totally isolated with an independent I/O logic interface. The exchange of data must be implemented via the I/O logic interface. Thus, the probability that the devastating data of the virtual running environment infects the actual operating system is substantially eliminated. In fact, the virtual running environment and the actual operating system are isolated logically. Because the I/O logic interface is set between the virtual running environment, which is formed due to the control program obtaining the limited control right on the system, and the operating system, the I/O logic interface plays the role of logic isolation. The data of the actual operating system needs to be converted in the logic format and input to the virtual running environment, and the information returned from the virtual running environment needs to be reverse converted in the logic format and output to the actual operating system.

Operations of the control program such as the responding, controlling and recording with respect to the program to be checked may be interpreted as triggering, inducing, recording and returning processes with respect to the behavior of the program to be checked, wherein an operating system is simulated in the virtual running environment, so that the file or program to be checked may enter the virtual operating system, and the running of it is simulated. Thus, all behaviors of the file or program may be actually found and recorded, and the behaviors recorded may be returned via the I/O logic interface.

Now, the running, triggering, inducing, recording and returning processes of a program will be simulated in a "virtual running environment" by taking a program "Password Probing Attack" as an example. The processes are carried out in, for example, Windows operating system.

For example, a certain program ("the program" for short below) uses Internet Process Connection (IPC) to perform password probing on accounts such as *guest* and *administrator.* If the probing is successful, the program copies itself to the directory *system32* of the system of the opposite party and then registers itself as a system service.

The virtual running environment immediately recognizes that the program is using IPC according to an operating system key function call table that is customized. At this point, the "virtual running environment" simulates the actual operating system to return an IPC response to the program and return a signal indicating password authentication success, and records this behavior of the program at the same time. However, the process of responding and returning a success signal is a virtual and false process, the object of which is to induce the next behavior of the program. By analogy, the behavior information will be output through an I/O logic interface after all the behaviors are recorded.

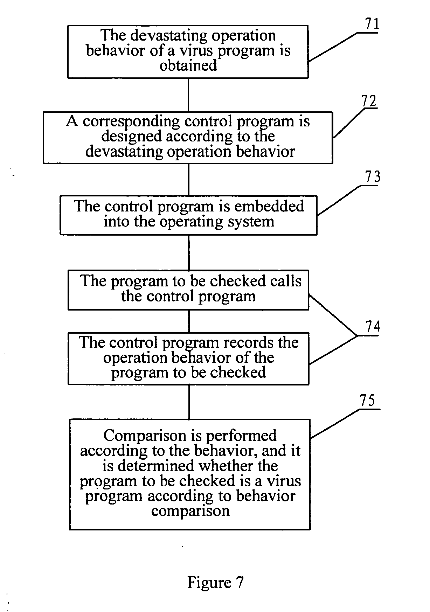

Referring to Figure 7, which is a flow chart of the method for detecting computer virus according to an embodiment of the invention. First of all, this method includes the method for checking program operation behavior according to the embodiment of the invention, including:

Step 71: obtaining the devastating operation behavior of a known virus program;

Step 72: compiling a corresponding control program according to the devastating operation behavior;

Step 73: embedding the control program into an operating system;

Step 74: calling the corresponding control program by the devastating operation behavior of the program to be checked, and recording the operation behavior of the program to be checked by the control program; and

Step 75: determining whether the program to be checked is a virus program according to the obtained behavior data or behavior data set of the program to be checked as well as the preset behavior data or behavior data set of typical virus programs.

Because other steps have been described in the method for checking program operation behavior, only Step 75 of the final determination and identification will be described in detail here.

For easy storing and calling, the preset behavior data or behavior data set of virus programs may be stored in database. The behavior data of the virus program may be obtained with the above manual analysis process or computer analysis process. Alternatively, the existing behavior analysis result of the virus program may be adopted directly. The behavior data of the virus program is a source code sequence block conforming to certain conditions.

It may be determined whether the program to be checked is a virus program by comparing the obtained behavior data or behavior data set of the program to be checked with the preset behavior data or behavior data set of virus programs. However, the object of determining whether the program to be checked is a virus program may also be attained via other analysis methods known by one skilled in the art. The rules employed for determination may be obtained by one skilled in the art based on experiences, and great differences may exist therebetween. However, all these rules can provide the determination result whether the program to be checked is a virus program or not, and the only difference lies in that the determination accuracies are somewhat different. Moreover, because different analysis methods employed will certainly result in different rules, no limitation will be laid on the analysis method and determination rule employed herein. As long as the behavior data comparison mode according to the embodiment is used, the method falls in the scope of the invention. Hereinafter, illustration will be made with a determination rule.

The behavior data or behavior data set (hereinafter will be referred to as "behavior data" as the general name) of a known virus may be obtained by analyzing the known virus program with a manual or computer analysis process, and the behavior data may be stored in a database, which is referred to as devastating behavior database herein. A series of behaviors operation data of various viruses are stored in the devastating behavior database, and the behavior operation of the virus program may also be selected by the technician according to certain rules. For example, operation behavior data that are often executed by a virus program to carry out destruction are selected. For example, the operation of employing 13H interruption to write disk is a common behavior of virus programs, and such operation is rather special. By selecting operation behavior data, only a few data volume for determining an unknown program may be stored in the devastating behavior database, so the comparison speed of the program behavior data may be improved. However, a computer may also be employed to automatically analyze the known virus programs and record all the behavior data of the virus programs. Alternatively, the behavior data of the virus programs may be filtered and recorded by a computer according to a predefined rule.

Thus, it may be determined whether the program to be checked is a virus program by comparing the behavior data of the program to be checked with the behavior data in the devastating behavior database.

Determination Situation A: When the behavior data of the program to be checked are the same as or similar to the virus program behavior data stored in the devastating behavior base, it may be concluded that the program to be checked is a known virus program or a variation of a known virus program type. With respect to the above described being the same or similar, one or more parameters may be predefined, and it may be regarded as the same or similar when the matching degree or inclusion degree between the behavior data of the program to be checked and the typical behavior data reaches or exceeds the parameters defined.

Specifically, in an embodiment, the behavior data of a certain program to be checked are: behavior 1, behavior 2, behavior 3, behavior 4, behavior 5, behavior 6, behavior 7 and behavior 8.

The series of behavior data of a certain virus stored in the devastating behavior database are: behavior 2, behavior 3, behavior 4, behavior 5 and behavior 6.

The following result may be obtained by comparing the above behavior data: the behavior of the program to be checked totally includes the behavior features of the virus program, so it may be directly determined that the program to be checked is a variation of the virus program.

Determination Situation B: When the behavior data of the program to be checked do not conform to any one of the virus program behavior data in the devastating behavior base, it is determined that the program to be checked is a legal program.

Specifically, in an embodiment, the behavior data of a certain program to be checked are: behavior -1, behavior -2 and behavior -3.

The devastating behavior data in the devastating behavior database include: behavior 1, behavior 2, behavior 3, behavior 4, behavior 5, behavior 6, ..., behavior n (n is a natural number).

The following result may be obtained by comparing the above behavior data: the behavior of the program to be checked does not include any one of the behaviors stored in the devastating behavior base, so the program to be checked is regarded as legal.

Determination Situation C: After the behavior data of the program to be checked are compared with the virus program behavior data stored in the devastating behavior database, if the comparison result does not belong to any one of the above determination situations A and B, a further identification needs to be performed. However, such a process for further identification is only used for increasing the identification accuracy of the unknown virus program. There may also be only two determination situations: Yes (A) or No (B).

Specifically, in an embodiment, the behavior data of a program to be checked are: behavior 1, behavior 2, behavior 3 and behavior 4.

The series of behaviors of a certain virus program in the devastating behavior database include: behavior 2, behavior 3, behavior 4, behavior 5 and behavior 6.

The following result may be obtained after comparison: the behaviors of the program to be checked only include a part of the series of behaviors of a certain virus program, so the property of the program to be checked cannot be directly determined, and a further determination on the program to be checked needs to be performed. A conclusion may also be given directly, and the program to be checked may be regarded as a virus program or not a virus program. However, such a conclusion lacks accuracy. To improve the identification degree of virus programs, it is required to perform a further determination on the program to be checked.

In the further determination process, the determination may be performed through the feature code comparison which is generally used at present. Alternatively, the above determination situation C may be comprised in the determination situation B, i.e., it is determined that the program to be checked is a legal program in this situation. However, such a processing makes the recognition rate to detect an unknown virus very low.

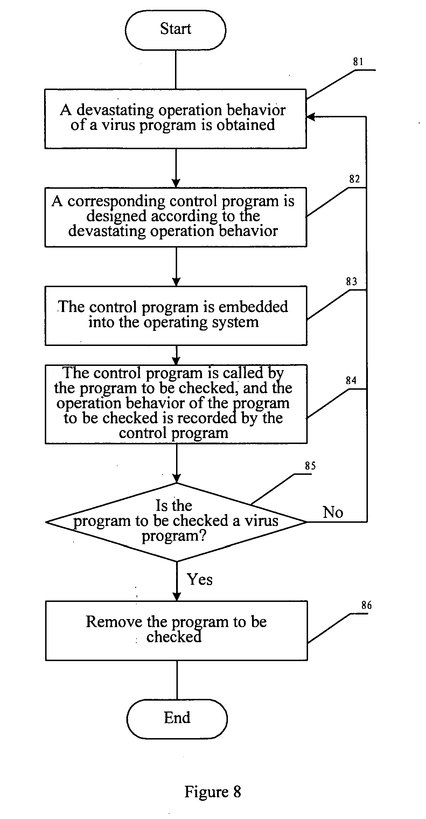

Referring to Figure 8, which is a flow chart of the method for detecting and removing a computer virus according to an embodiment of the invention, which includes the following steps:

Step 81: The devastating operation behavior of a known virus program is obtained;

Step 82: A corresponding control program is designed according to the devastating operation behavior;

Step 83: The control program is embedded into an operating system;

Step 84: The corresponding control program is called by the devastating operation behavior of the program to be checked, and the operation behavior of the program to be checked is recorded by the control program;

Step 85: It is determined whether the program to be checked is a virus program according to the obtained behavior data or behavior data set of the program to be checked as well as the preset behavior data or behavior data set of typical virus programs; and

Step 86: The program to be checked is removed if it is determined that the program to be checked is a computer virus program.

In the above method for detecting and removing the computer virus, it only removes the virus detected based on the method for detecting computer virus.

The method for detecting and removing the computer virus according to the embodiment may also realize the recovery of data destroyed by the virus. The recovery operation of the data destroyed by the virus may be accomplished with the following additional steps: a corresponding reverse behavior operation step is established according to the obtained behavior data or behavior data set of the program to be checked; and the reverse behavior operation step is executed.

Because the executable behavior operation steps of the virus program have been obtained, the reverse behavior operation steps corresponding to the behavior operation step may be established according to the behavior operation steps. For example, the reverse operation steps 1, 2, ..., N corresponding to the behavior operation steps 1, 2, ..., N maybe established. Assuming that the behavior operation step 1 is used for transferring storage data, then the corresponding reverse behavior operation step 1 will be used for the corresponding reverse behavior operation to recover the data; if the behavior operation step 2 is used for deleting data, the corresponding reverse behavior operation step 2 will be used for accomplishing the corresponding reverse operation to recover the data deleted (for example, to recover the data with the method of redundancy checking). In the step of establishing a corresponding reverse behavior operation, a set of program source code instructions is generated, wherein the operation steps corresponding to the instruction set are reverse to the operations executed in the behavior operation steps.

Because the reverse behavior operation steps are the set of the program source code instructions, the execution of the reverse behavior operation steps is in fact a process to respectively call the program source code instructions in turn. The corresponding execution operation is performed according to respective program source code instruction, so that the recovery operation of data destroyed by the virus program may be accomplished. For example, a main function for executing the reverse behavior operation steps is established. In the main function, a process for respectively calling the program source code instructions in turn is performed actually.

The reverse behavior operation steps, i.e., the set of program source code instructions, may be stored in a database or in a large-scale data storing table. For example, when the reverse behavior operation steps are stored in the database table, the reverse behavior operation steps of a certain virus program will be a storage element (subset) in the database. In the database, the storage element, i.e., the reverse behavior operation steps of a certain virus program, may be stored with the following data structure:

(virus program name), (reverse behavior operation step 1, reverse behavior operation step 2, ... , reverse behavior operation step N), (additional information segment, delete virus program body).

Wherein, 1, 2, ..., N denote the order of the steps to remove the virus program. The reverse behavior operation steps include a source code sequence block, which is used for accomplishing the reverse operations corresponding to the virus program behavior operation steps. The information of the above reverse behavior operation steps may also include relevant operation parameters, etc. The above data structure may also employ other modes, such as:

(virus program name), (reverse behavior operation step 1, reverse behavior operation step 2, ..., reverse behavior operation step N, additional information segment), (delete virus program body).

In fact, the above storage mode and data structure for storage are only a specific embodiment for illustrating the technical concept of the invention, and it may be replaced by other feasible storage modes and data structures, as long as the storing and calling of the reverse behavior operation steps can be implemented.

The corresponding reverse behavior operation steps may be obtained from the behavior operation steps via a correspondence table, i.e., a preset data list. Various behavior operation steps and the corresponding reverse behavior operation steps are listed correspondingly. When the virus program performs a behavior operation step, the corresponding reverse behavior operation step may be obtained by comparing from the preset data list, such as adding and deleting. The conversion processes from all the behavior operation steps of the virus program to the reverse behavior operation steps will be accomplished in turn.

The method for checking program operation behavior and the method for detecting and removing a virus program have been illustrated in detail above. The principles and embodiments of the invention have been described with specific examples. However, the above embodiments are only used for better understanding of the method of the invention and its core concept. Various modifications and variations may be made by those skilled in the art without departing from the scope of the invention. Therefore, the invention in its broader aspects is not limited to the specific details and representative embodiments shown and described herein.

## Claims

1. A method for checking program operation behavior, comprising:
obtaining a devastating operation behavior of a known virus program, and setting a corresponding control program according to the devastating operation behavior;
making the control program obtain a control right on the devastating operation behavior; and
calling, by the devastating operation behavior of a program to be checked, the corresponding control program, and recording, by the control program, the operation behavior of the program to be checked.

2. The method for checking program operation behavior according to claim 1, further comprising: returning, by the control program, successful response information to the program to be checked.

3. The method for checking program operation behavior according to claim 2, wherein, the control program is embedded into an operating system or a system function call routine corresponding to the devastating operation behavior, and the control right on the devastating operation behavior is handed over to the corresponding control program, so that the control program obtains the control right on the devastating operation behavior.

4. The method for checking program operation behavior according to claim 3, wherein, the control program is embedded into the operating system according to the following steps:
adding information required for calling the control program into a system function call table of the operating system; and
modifying an address of the system function call routine to an address of the corresponding control program.

5. The method for checking program operation behavior according to claim 3, wherein, the control program is embedded into the operating system according to the following steps:
storing information required for calling the control program into an independent operation behavior call table; and
making a priority of the operation behavior call table higher than that of the system function call table of the operating system.

6. The method for checking program operation behavior according to claim 1, 2, 3, 4 or 5, further comprising:
setting a closed memory running space for the program to be checked.

7. The method for checking program operation behavior according to claim 6, wherein, the closed memory running space is set for the program to be checked by performing collision detection on an address range involved during the running of the program to be checked or by allocating an address range to the program to be checked.

8. The method for checking program operation behavior according to claim 1, 2, 3, 4 or 5, further comprising:
converting the program to be checked into a format that cannot be recognized by the actual operating system and storing the program converted to a designated storage address.

9. The method for checking program operation behavior according to claim 1, 2, 3, 4 or 5, further comprising:
outputting all the recorded behavior data of the program to be checked after the running of the program to be checked is completed.

10. The method for checking program operation behavior according to claim 1, 2, 3, 4 or 5, wherein, an independent input/output logic interface is set between the operating system and the control program for transferring data therebetween.

11. A method for detecting computer virus, comprising:
obtaining a devastating operation behavior of a virus program;
setting a corresponding control program according to the devastating operation behavior;
making the control program obtain a control right on the devastating operation behavior; calling, by the devastating operation behavior of a program to be checked, the corresponding control program; recording, by the control program, an operation behavior of the program to be checked; and
determining whether the program to be checked is a virus program according to obtained behavior data or a behavior data set of the program to be checked as well as preset behavior data or behavior data set of typical virus programs.

12. The method for detecting computer virus according to claim 11, wherein, the control program is embedded into an operating system, or a system function call routine corresponding to the devastating operation behavior hands over its control right to the corresponding control program, so that the control program obtains the control right on the devastating operation behavior.

13. A method for removing computer virus, comprising:
obtaining a devastating operation behavior of a virus program;
setting a corresponding control program according to the devastating operation behavior;
calling the control program by a program to be checked, and recording an operation behavior of the program to be checked by the control program;
determining whether the program to be checked is a virus program according to obtained behavior data or a behavior data set of the program to be checked as well as preset behavior data or a behavior data set of typical virus programs; and
removing the program to be checked if it is determined that the program to be checked is a computer virus program.

14. The method for removing computer virus according to claim 13, further comprising:
embedding the control program into an operating system, or handing over, by a system function call routine corresponding to the devastating operation behavior, a control right to the corresponding control program, and making the control program obtain the control right on the devastating operation behavior.

15. The method for removing computer virus according to claim 13 or 14, further comprising:
establishing a corresponding reverse behavior operation step according to the obtained behavior data or behavior data set of the program to be checked; and
executing the reverse behavior operation step.
